# EUROPÄISCHE PATENTANMELDUNG

(11) **EP 3 355 216 A1**
(43) Veröffentlichungstag der Anmeldung: **01.08.2018**
(21) Anmeldenummer: 17152994.4
(22) Anmeldetag: 25.01.2017
(51) Int. Cl.: G06F 21/10, H04L 29/06

(54) **VORRICHTUNG ZUR BEREITSTELLUNG EINES SCHLÜSSELS ZUM ENTSCHLÜSSELN EINES VERSCHLÜSSELTEN INHALTS**

(71) Anmelder: PaxLife GmbH & Co. KG, 14469 Potsdam (DE)
(72) Erfinder: Schreiber, Gerald, 21465 Wentdorf (DE); Cabos, Ralf, 359612 Singapore (SG); Philippe, Thibaud, 14469 Potsdam (DE)

(57) **Zusammenfassung**

Eine Vorrichtung (OBKS) zur Bereitstellung eines Schlüssels zum Entschlüsseln eines verschlüsselten Inhalts umfasst eine Nahfeld-Empfangseinheit (REC) zum Empfang eines in einem Nahfeld der Vorrichtung ausgestrahlten Rundfunksignals (SIG). Dabei ist eine Kontrolleinheit (KS) der Vorrichtung (OBKS) ausgebildet, zu bestimmen, ob ein vorbestimmtes Rundfunksignal empfangen wird, und den Schlüssel allenfalls an einer Schnittstelle (WIFI) der Vorrichtung (OBKS) bereitzustellen, während das vorbestimmte Rundfunksignal empfangen wird.

## Beschreibung

Die vorliegende Erfindung betrifft eine Vorrichtung zur Bereitstellung eines Schlüssels zum Entschlüsseln eines verschlüsselten Inhalts.

Viele Fahrzeuge im öffentlichen Personenverkehr bieten Inhalte, speziell aber nicht nur audio-visuelle Bewegtinhalte, für ihre Nutzer an.

Flugzeuge bieten beispielweise oft eine Film- und Spielebibliothek an. Viele Inhalte sind dabei urheberrechtlich und/oder anders geschützt. Diesen Schutz gilt es bei der Bereitstellung der Inhalte zu wahren.

Eine Möglichkeit besteht in der Beschränkung des Bibliothekszugriffs auf spezielle Geräte, die dem Nutzer für den Flug zur Verfügung gestellt werden. Dies können in die Sitze integrierte oder für den Flug ausgehändigte Bildschirmgeräte sein.

Da jedoch Endgeräte der Nutzer, also beispielsweise Smartphones, digitale persönliche Assistenten (PDA), Laptops oder Tablet Computer, bereits grundsätzlich tauglich sind, die Inhalte darzustellen, besteht auch im gezielten Übertragen, Streamen, auf zuvor registrierte Endgeräte eine Möglichkeit der Rechtewahrung.

Grundsätzlich kommt zur Rechtewahrung und anderen Zwecken auch Verschlüsselung zum Einsatz.

Der Inhalt liegt beispielsweise verschlüsselt allgemein verfügbar vor. Er kann jedoch nur mit dem richtigen Schlüssel darstellbar entschlüsselt werden.

Die Kontrolle über den Inhalt wird dann über die Zugriffskontrolle auf den Schlüssel erreicht, der in einer Speichereinheit gespeichert ist.

Beispielsweise verwenden Verwaltungssysteme für digitale Rechte (DRM-Systeme für engl.: digital rights management) kryptografische Verfahren, um Zugriff auf digitale Inhalte so zu realisieren, dass die Rechte der Urheber gewahrt bleiben.

Dabei wird ein zu schützender digitaler Inhalt durch Verschlüsselung eindeutig an eine Lizenz gebunden. Ohne die zum digitalen Inhalt gehörige gültige Lizenz kann der Benutzer zwar die Datei herunterladen, nicht jedoch auf den Inhalt zugreifen.

Die Lizenz wiederum wird nur auf Anforderung und nur dann zur Verfügung gestellt, wenn das die Lizenz anfragende Wiedergabeprogramm als authentisch und integer verifiziert worden ist. Die Lizenz umfasst dabei den Schlüssel, der für die Entschlüsselung des digitalen Inhalts notwendig ist.

### Erfindung

Die vorliegende Erfindung gemäß Anspruch 1 bildet eine vorbekannte Vorrichtung zur Bereitstellung eines Schlüssels zum Entschlüsseln eines verschlüsselten Inhalts durch eine Nahfeld-Empfangseinheit zum Empfang eines in einem Nahfeld der Vorrichtung ausgestrahlten Rundfunksignals weiter. Dabei ist die Kontrolleinheit ausgebildet, zu bestimmen, ob ein vorbestimmtes Rundfunksignal empfangen wird, und den Schlüssel allenfalls an der Schnittstelle bereitzustellen, während das vorbestimmte Rundfunksignal empfangen wird.

Dies ermöglicht eine Fernsteuerung der Vorrichtung mittels eines Rundfunksignals. Insbesondere können der Schlüssel und damit der Inhalt gezielt zeitlich und räumlich beschränkt in einem Fahrzeug während der Fahrt verfügbar gemacht werden.

In einer vorteilhaften Ausführungsform ist die Kontrolleinheit daher weiterhin ausgebildet, das empfangene Rundfunksignal dahingehend auszuwerten, ob es ein vorbestimmtes Fahrzeug und/oder eine vorbestimmte Fahrtnummer signalisiert, und, allenfalls wenn dem so ist, den Schlüssel bereitzustellen.

Dies ist eine vorteilhafte Form der Verfügbarkeitsbeschränkung. Viele Fahrzeuge im öffentlichen Personenverkehr bieten Inhalte, speziell aber nicht nur audio-visuelle Bewegtinhalte, für ihre Nutzer an und senden zugleich Kennungssignale. Flugzeuge bieten beispielweise eine Film- und Spielebibliothek an und sind beispielsweise während des Fluges zur Ausstrahlung eines sogenannten Automatic Dependent Surveillance Broadcast Signals (auch ADS-B, zu Deutsch: automatisches Rundfunksignal für die abhängige Überwachung) verpflichtet. Das ADS-B überträgt Daten, der Position, Flugnummer, Geschwindigkeit und Kurs des Flugzeug entnehmbar sind. Das Fahrzeug kann mithin ein Flugzeug und das Rundfunksignal ein Automatic Dependent Surveillance - Broadcast (ADS-B) Signal sein.

Die Kontrolleinheit kann weiterhin ausgebildet sein, den Schlüssel allenfalls dann bereitzustellen, wenn das empfangene Rundfunksignal eine Bewegung des vorbestimmten Fahrzeugs signalisiert.

Das vorbestimmte Fahrzeug kann ein Flugzeug und die Kontrolleinheit kann weiterhin ausgebildet sein, den Schlüssel allenfalls dann bereitzustellen, wenn das empfangene Rundfunksignal eine Flughöhe des Flugzeugs signalisiert, die eine vorbestimmte Mindestflughöhe nicht unterschreitet.

Zusätzlich oder Alternativ kann die Kontrolleinheit weiterhin ausgebildet sein, den Schlüssel allenfalls dann bereitzustellen, wenn das empfangene Rundfunksignal eine Bewegung des vorbestimmten Fahrzeugs in einer vorbestimmten geographischen Region signalisiert.

So lässt sich die Verfügbarkeit des Inhalts beispielsweise auf die Dauer eines Fluges und/oder regional einschränken.

Die Schnittstelle kann eine Luftschnittstelle sein und die Schnittstelle kann eine Sendeeinheit umfassen, über die der Schlüssel durch Aussendung in das Nahfeld bereitgestellt wird.

Dann ist es Endgeräten besonders einfach möglich, den Schlüssel zu erlangen, um damit den verschlüsselten Inhalt zu entschlüsseln.

Der verschlüsselte Inhalt kann in der oder einer weiteren Speichereinheit gespeichert sein und/oder die Vorrichtung kann eine Ausstrahlungseinheit umfassen, die ausgebildet sein kann, den verschlüsselten Inhalt über die Schnittstelle auszustrahlen.

So können Endgeräte besonders einfach den verschlüsselten Inhalt als Broadcast zur Verfügung gestellt bekommen und müssen den Inhalt nicht bereits zuvor gespeichert haben. Die Vorrichtung muss den Inhalt nur einmal an alle Geräte übertragen und muss keine redundanten Einzelverbindungen zu den Geräten für die Übertragung aufbauen und pflegen.

Die Ausstrahlungseinheit kann ausgebildet sein, den verschlüsselten Inhalt nur auszustrahlen, während das Rundfunksignal empfangen wird.

Der verschlüsselte Inhalt kann in Blöcken bereitgestellt werden, von denen einer oder mehrere Blöcke wiederholt wird.

Dies erhöht die Toleranz gegenüber Übertragungsfehlern.

Die Ausstrahlungseinheit kann ausgebildet sein, zu steuern, welche Blöcke wiederholt werden. Dies kann eine zyklische Wiederholung aller Blöcke oder eine Wiederholung von Blöcken, für die eine Empfangsfehlermeldung von mindestens einem Nutzendgerät empfangen wurde, sein.

Dies erhöht die Toleranz gegenüber Übertragungsfehlern noch mehr.

Die Nahfeld-Empfangseinheit kann eine Signaldämpfungseinheit zur Dämpfung des Radiosignals umfassen. Dies ist eine einfache Möglichkeit zur Beschränkung auf das Nahfeld.

Weitere bevorzugte Ausgestaltungen der Erfindung ergeben sich aus den übrigen, in den Unteransprüchen genannten Merkmalen.

Die verschiedenen, in dieser Anmeldung genannten, Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel der Erfindung und

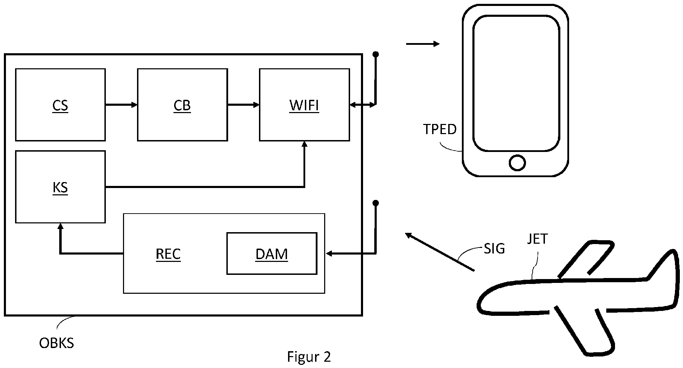

- Figur 2: ein weiteres Ausführungsbeispiel der Erfindung.

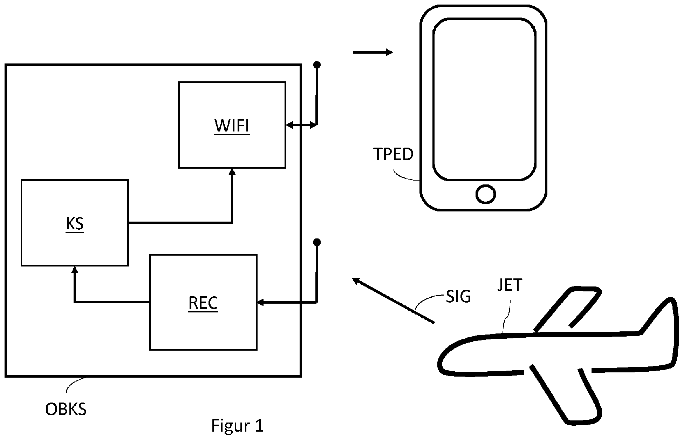

Figur 1 zeigt ein Ausführungsbeispiel der Erfindung, welches für das Anwendungsbeispiel in einem Flugzeug ausgebildet ist. Das Ausführungsbeispiel dient dabei als Server für verschlüsselte Flugunterhaltungsinhalte und für Schlüssel für deren Entschlüsselung.

Die gezeigte Vorrichtung OBKS, die auch als On-Bord Key Server bezeichnet wird, umfasst dabei einen auch als Keyserver bezeichneten Schlüsselserver KS, der als Kontrolleinheit dient und einen internen Speicher umfasst, in dem im Beispiel der Schlüssel gespeichert ist.

Weiterhin umfasst die Vorrichtung OBKS einen Automatic Dependent Surveillance - Broadcast (ADS-B) Empfänger REC, der als Empfangseinheit dient. Die Empfangseinheit REC empfängt das Rundfunksignal SIG und leitet es an die Kontrolleinheit KS weiter.

Die Kontrolleinheit KS ist ausgebildet, anhand des Rundfunksignals SIG zu bestimmen, ob die Empfangseinheit REC ein Rundfunksignal SIG aus einem Nahfeld der Vorrichtung OBKS empfängt. Das Nahfeld ist dabei im Beispiel so zu verstehen, dass, wenn sich die Vorrichtung in einem Flugzeug JET befindet, im Wesentlichen nur ein ADB-S Sender dieses Flugzeugs noch als empfangen bestimmt wird. Die Kontrolleinheit KS kann beispielsweise ein Signal, dessen maximaler Pegel eine Schwelle nicht überschreitet, als nicht empfangen bestimmen. Mithilfe der Kontrolleinheit KS und dem ADS-B Signal wird so der Entschlüsselungsort "Flugzeug" verifiziert.

Die Kontrolleinheit KS ist weiterhin ausgebildet, zu bestimmen, ob das empfangene Rundfunksignal SIG einem vorbestimmten Rundfunksignal entspricht. Im Beispiel bedeutet dies, dass die Flugnummer ausgewertet wird.

Die Kontrolleinheit KS ist schließlich ausgebildet, den Schlüssel an einer Schnittstelle WIFI, die der Vorrichtung OBKS zugeordnet ist, nur zur Verfügung zu stellen, wenn das empfangene Rundfunksignal SIG einem vorbestimmten Rundfunksignal entspricht. Im Beispiel ist die Schnittstelle WIFI eine Sendeeinheit nach IEEE 802.11 für ein kabelloses lokales Netzwerk (WLAN beziehungsweise WIFI), über die der Schlüssel in das Nahfeld ausgestrahlt wird, wenn die empfangene Flugnummer der vorbestimmten Flugnummer entspricht. Dadurch wird der Schlüssel automatisch temporär und räumlich beschränkt ausgestrahlt, wenn sich die Vorrichtung an Bord eines Flugzeugs mit der vorbestimmten Flugnummer befindet und während dieses sein ADS-B Signal ausstrahlt. Die Auswertung der vorbestimmten Flugnummer ist beispielhaft, zusätzlich oder alternativ können Startort, Zielort, Flugzeugkennung, Position, Geschwindigkeit und/oder Kurs ausgewertet werden. Es kann auch eine Vielzahl von Flugnummern, Flugzeugkennungen und/oder Paarungen von Start- und Zielort vorbestimmt sein, beispielsweise alle einer Fluggesellschaft.

Endgeräte TPED der Nutzer können nun den verschlüsselten Inhalt vor oder während des Flugs speichern und während des Flugs entschlüsseln.

Dies ist eine einfach realisierbare Verteilung des Inhalts, die ohne individuelle Videostreams mit gleichzeitiger Übertragung desselben Inhalts an unterschiedliche Endgeräte auskommt.

Die Ausstrahlung ist dabei ebenso wie die Ausstrahlung des Schlüssels beschränkt. Das heißt, nur wenn sich im Nahfeld der Vorrichtung ein ADS-B Sender befindet, der die vorbestimmte Flugnummer ausstrahlt, sich die Vorrichtung also im Flugzeug während des Flugs befindet, wird der verschlüsselte Inhalt ausgestrahlt.

Die Ausstrahlung des Inhalts kann in Blöcken erfolgen, die auch wiederholt ausgestrahlt werden können, beispielsweise zyklisch oder nach einer Nutzerrückmeldung über fehlerhaften Empfang. Insbesondere ist eine Ausstrahlung vorteilhaft, bei der ein bereits empfangener Block dargestellt werden kann, während der folgende Block empfangen wird.

Zusammen mit dem Inhalt und/oder dem Schlüssel können diejenigen Daten aus dem ADS-B Signal und/oder eine Karte mitausgestrahlt werden, die es einem Endgerät ermöglichen, eine Bewegtkarte (Moving Map) mit der aktuellen Flugposition, Flugdauer, verbleibende Flugzeit und/oder Geschwindigkeit darzustellen.

Weiterhin können zusätzlich oder alternativ Werbeinhalte mit ausgestrahlt werden. Die Werbeinhalte können beispielsweise an Bord angebotene Waren und/oder Dienstleistungen bewerben. Die Werbung kann dabei von einer tatsächlichen Verfügbarkeit der Ware/Dienstleistung an Bord abhängen und nicht ausgestrahlt werden, wenn das Produkt nicht mehr verfügbar ist. Vorteilhaft jedoch nicht notwendigerweise können beworbene Produkte mittels des Endgeräts direkt erworben werden.

In einem anderen Ausführungsbeispiel ist die Vorrichtung mit einem Endgerät, auf dem der verschlüsselte Inhalt zumindest teilweise gespeichert ist, verbindbar. Der verschlüsselte Inhalt wurde beispielsweise vor Antritt des Fluges gespeichert. Die Vorrichtung bestimmt, ob das vorbestimmte Signal empfangen wird. Ist dies der Fall, stellt die Vorrichtung dem Endgerät den Schlüssel zur Verfügung. Auch hier kann die Applikation zusätzlich optional eine Moving Map generieren

In noch einem anderen Ausführungsbeispiel ist die Erfindung eine Applikation für ein Endgerät, auf dem der verschlüsselte Inhalt zumindest teilweise gespeichert ist. Die Applikation verwendet das Endgerät als Rundfunkempfänger und bestimmt, ob das vorbestimmte Signal empfangen wird. Ist dies der Fall, entschlüsselt die Applikation den Inhalt. Die Schnittstelle ist in der Applikation intern realisiert. Auch hier kann die Applikation zusätzlich optional eine Moving Map generieren.

In wieder einem anderen Ausführungsbeispiel der Erfindung ist in der Speichereinheit eines Servers des Flugzeugs der verschlüsselte Inhalt gespeichert und eine Kontrolleinheit kontrolliert eine Ausstrahlung des verschlüsselten Inhalts über einen WIFI-Sender in Abhängigkeit davon, ob die Nahfeld-Empfangseinheit aus dem Nahfeld das vorbestimmte Rundfunksignal empfängt.

Die Vorrichtung kann vorteilhaft tragbar und/oder batteriebetrieben ausgebildet sein. Einbaukosten entfallen.

Dann kann das Gerät auch einfach nach dem Flug von Bord genommen werden und Inhalte im Speicher können am Boden aktualisiert werden, ohne dass auf die Inhalte außerhalb des Flugzeugs zugreifbar wäre.

Obwohl die Erfindung im Detail durch bevorzugte Ausführungsbeispiele näher illustriert und beschrieben wurde, so ist die Erfindung nicht durch die näher beschriebenen Beispiele eingeschränkt und Variationen können vom Fachmann hieraus abgeleitet werden, ohne den Schutzumfang der Erfindung, der sich aus den nachfolgenden Ansprüchen ergibt, zu verlassen.

### Bezugszeichen

- JET: Flugzeug
- TPED: Endgerät
- OKBS: Vorrichtung zur Bereitstellung eines Schlüssels
- CS: Inhaltsspeicher
- CB: Ausstrahlungseinheit
- KS: Kontrolleinheit
- REC: Nahfeld-Empfangseinheit
- DAM: Dämpfungseinheit
- SIG: Rundfunksignal
- WIFI: Sendeeinheit

## Patentansprüche

1. Vorrichtung (OBKS) zur Bereitstellung eines Schlüssels zum Entschlüsseln eines verschlüsselten Inhalts, umfassend eine Speichereinheit (CS), in der der Schlüssel gespeichert ist, und eine Kontrolleinheit (KS), die die Bereitstellung des Schlüssels an einer Schnittstelle (WIFI) der Vorrichtung (OBKS) kontrolliert, wobei die Vorrichtung (OBKS) weiterhin eine Nahfeld-Empfangseinheit (REC) zum Empfang eines in einem Nahfeld der Vorrichtung (OBKS) ausgestrahlten Rundfunksignals (SIG) umfasst und die Kontrolleinheit (KS) ausgebildet ist, zu bestimmen, ob ein vorbestimmtes Rundfunksignal empfangen wird, und den Schlüssel allenfalls an der Schnittstelle (WIFI) bereitzustellen, während das vorbestimmte Rundfunksignal empfangen wird.

2. Vorrichtung nach Anspruch 1, wobei die Kontrolleinheit (KS) weiterhin ausgebildet ist, ein empfangenes Rundfunksignal (SIG) dahingehend auszuwerten, ob es ein vorbestimmtes Fahrzeug (JET) und/oder eine vorbestimmte Fahrtnummer signalisiert, und allenfalls wenn dem so ist, den Schlüssel bereitzustellen.

3. Vorrichtung nach Anspruch 2, wobei die Kontrolleinheit (KS) weiterhin ausgebildet ist, den Schlüssel allenfalls dann bereitzustellen, wenn das empfangene Rundfunksignal (SIG) eine Bewegung des vorbestimmten Fahrzeugs (JET) signalisiert.

4. Vorrichtung nach Anspruch 2 oder 3, wobei das vorbestimmte Fahrzeug ein Flugzeug ist und die Kontrolleinheit (KS) weiterhin ausgebildet ist, den Schlüssel allenfalls dann bereitzustellen, wenn das empfangene Rundfunksignal (SIG) eine Flughöhe des Flugzeugs (JET) signalisiert, die eine vorbestimmte Mindestflughöhe nicht unterschreitet.

5. Vorrichtung nach irgendeinem der Ansprüche 2 bis 4, wobei die Kontrolleinheit (KS) weiterhin ausgebildet ist, den Schlüssel allenfalls dann bereitzustellen, wenn das empfangene Rundfunksignal (SIG) eine Position des vorbestimmten Fahrzeugs (JET) in einer vorbestimmten geographischen Region signalisiert.

6. Vorrichtung nach einem der vorangehenden Ansprüche, wobei das Fahrzeug ein Flugzeug (JET) und das Rundfunksignal (SIG) ein Automatic Dependent Surveillance - Broadcast (ADS-B) Signal ist.

7. Vorrichtung nach einem der vorangehenden Ansprüche, wobei die Schnittstelle eine Luftschnittstelle ist und die Schnittstelle eine Sendeeinheit (WIFI) umfasst, über die der Schlüssel durch Aussendung in das Nahfeld bereitgestellt wird.

8. Vorrichtung nach Anspruch 7, wobei der verschlüsselte Inhalt in der oder einer weiteren Speichereinheit (CS) gespeichert ist und die Vorrichtung (OKBS) eine Ausstrahlungseinheit (CB) umfasst, die ausgebildet ist, den verschlüsselten Inhalt über die Schnittstelle (WIFI) auszustrahlen.

9. Vorrichtung nach Anspruch 8, wobei die Ausstrahlungseinheit (CB) ausgebildet ist, den verschlüsselten Inhalt nur auszustrahlen, während das Rundfunksignal (SIG) empfangen wird.

10. Vorrichtung nach Anspruch 9, wobei der verschlüsselte Inhalt in Blöcken bereitgestellt wird.

11. Vorrichtung nach Anspruch 10, wobei die Kontrolleinheit (CB) ausgebildet ist, zu steuern, welcher Block wiederholt wird.

12. Vorrichtung nach einem der vorangehenden Ansprüche, wobei die Nahfeld-Empfangseinheit (REC) eine Signaldämpfungseinheit (DMP) zur Dämpfung des Radiosignals (SIG) umfasst.
